# EUROPÄISCHE PATENTSCHRIFT

(11) **EP 3 237 702 B1**
(45) Veröffentlichungstag und Bekanntmachung des Hinweises auf die Patenterteilung: **06.02.2019**
(21) Anmeldenummer: 15817313.8
(22) Anmeldetag: 21.12.2015
(51) Int. Cl.: E04C 2/36, B32B 5/02, B32B 7/04, B32B 7/14, B32B 29/02, B32B 29/06, B32B 37/00, B32B 3/12, B32B 15/00, B32B 27/00, B32B 27/40, B32B 29/00, B32B 3/26, B29D 24/00, B32B 7/12, B29D 99/00, B32B 37/12

(54) **WABENKERNAUFBAU**
HONEYCOMB STRUCTURE
STRUCTURE ALVÉOLAIRE

(30) Priorität: 22.12.2014 EP 14199858
(43) Veröffentlichungstag der Anmeldung: 01.11.2017
(73) Patentinhaber: Magna Steyr Fahrzeugtechnik AG & Co. KG, 8041 Graz (AT)
(72) Erfinder: DIETZ, Wolfgang, 8081 Pirching (AT); DREZGA, Danijel, 8010 Graz (AT); WOLFSBERGER, Günter, 8501 Lieboch (AT)
(74) Vertreter: Zangger, Bernd
(86) Internationale Anmeldenummer: PCT/EP2015/080784
(87) Internationale Veröffentlichungsnummer: WO 2016/102459

(56) Entgegenhaltungen:
- EP-A1- 2 746 042
- WO-A1-2015/009279
- DE-B3-102012 022 713
- FR-A1- 2 782 529
- US-A- 4 465 725
- US-A1- 2005 147 790
- US-B1- 6 203 656

## Beschreibung

### Gebiet der Erfindung

Die vorliegende Erfindung betrifft einen Wabenkernaufbau, umfassend zumindest zwei Wabenkerne und eine zwischen den Wabenkernen angeordnete Verbindungsschicht. Die Erfindung betrifft auch ein Verfahren zur Herstellung eines solchen Wabenkernaufbaus und ein Verfahren zur Herstellung eines Sandwichbauteils sowie ein solches Sandwichbauteil.

### Stand der Technik

Wabenkerne werden üblicherweise als mittlere Schicht zwischen zwei Deckschichten in einem Sandwichbauteil verwendet, dass beispielsweise im Automobilbau als Karosseriebauteil eingesetzt werden kann. Meist werden flächige Sandwichbauteile erzeugt, deren Form nötigenfalls in einer Formpresse angepasst werden kann. Durch Pressen eines Wabenkernes ("Crush-Core Verfahren") wird jedoch die Festigkeit des Wabenkernes verringert, auch werden Materialkosten und Gewicht in Bereichen verringerter Dicke nicht eingespart.

Zur Herstellung komplizierterer dreidimensionaler Formen von Sandwichbauteilen und entsprechender Wabenkerne, beispielsweise von Wabenkernen mit Dickensprüngen, ist es bekannt einen Wabenkern entsprechend der größten gewünschten Dicke herzustellen und danach den Wabenkern in Bereichen gewünschter geringerer Dicke zu beschneiden. Dabei entsteht jedoch oft ein erheblicher Verschnitt der nicht weiter genützt werden kann.

Es ist auch bekannt zwei oder mehrere flächige ("zweidimensionale") Wabenkerne, beispielsweise unterschiedlicher Größe, miteinander zu verkleben, wobei eine Verklebung der Stege miteinander technisch kaum machbar ist und daher eine Zwischenschicht mit zweiseitigem Kleberauftrag zwischen den Wabenkernen genutzt wird, beispielsweise ein Klebefilm oder Klebepapier. Jedoch können so aufgebaute "dreidimensionale" Wabenkerne nur eingeschränkt weiter verarbeitet werden, da die Zwischenschicht ein Hindernis für manche Verfahren, wie eine spätere Formgebung in Presswerkzeugen, darstellt.

Die US 4 465 725 A offenbart eine Doppelschicht-Schalldämpfungs-Waben-Sandwichplatte mit struktureller Festigkeit zur Verwendung in rauen Umgebungen in und um Hochgeschwindigkeits-Fluidströmungswege in Verbindung mit Flugzeuggasturbinentriebwerken zur Erfüllung akustischer Anforderungen, umfassend erste und zweite nicht-metallische Wabenkerne, die jeweils eine Vielzahl von endseitig gerichteten Zellen aufweisen und eine erste dünne Schicht aus metallischem mikroporösem Material, die zwischen dem ersten und dem zweiten Wabenkern positioniert ist und mit den endseitig zugewandten Zellkanten der Wabenkerne klebend verbunden ist.

Aus der US 2005/147790 A1 ist ein Verfahren zum Herstellen einer Akustikplatte mit mindestens einem Doppelresonator, wobei diese Platte in der Dickenrichtung in der folgenden Reihenfolge mindestens die folgenden Schichten aufweist: eine mehrfach perforierte Akustikhaut, eine Primärwabe, ein ebenfalls mehrfach perforiertes Septum, eine Sekundärwabe und eine feste Haut, wobei die Platte durch Stapeln und Kleben der vorgenannten Bestandteile in einem Formwerkzeug in der gewünschten Form der zu erhaltenden Platte zusammengesetzt wird.

Die US 6 203 656 B1 offenbart ein Verfahren zur Herstellung einer akustischen Auskleidung, umfassend: Anordnen einer rohen Klebe-Trennung in Anlagekontakt zwischen einem Paar gegenüberliegender Wabenkerne, die ausgerichtet und bemessen sind, um Helmholtz-Resonatoren zum Dämpfen von Lärm zu bilden; und Aushärten der Klebe-Trennung, um die Kerne dadurch zu verbinden.

Die EP 2 746 042 A1 offenbart schließlich ein Verfahren zur Herstellung einer Wabenkern-Verbundlaminatstruktur, umfassend: Bereitstellen einer Wabenkernvorform, die einen Wabenkern und eine Stabilisierungsschicht umfasst, die aus mindestens einer Lage eines harzimprägnierten faserverstärkten Matrixmaterials besteht, das den Wabenkern umgibt; Aussetzen der Wabenkernvorform einer Hochtemperaturaushärtung, Auflegen einer endgültigen Laminatschicht, und Aussetzen des Endproduktvorformlings an Hochtemperatur- und Hochdruck-Autoklavenhärtungsbedingungen. Der Wabenkern kann dabei Abschrägungsseiten mit Abschrägungswinkeln zwischen etwa 30 ° bis etwa 85 ° aufweisen.

### Zusammenfassung der Erfindung

Es ist eine Aufgabe der Erfindung, einen Wabenkernaufbau anzugeben der dreidimensionale Strukturen abbilden und auch flexibel weiter bearbeitet werden kann, sowie ein Verfahren zur Herstellung eines solchen Wabenkernaufbaus anzugeben, sowie ein entsprechendes Verfahren zur Herstellung eines Sandwichbauteils aus einem solchen Wabenkernaufbau, sowie ein entsprechendes Sandwichbauteil.

Die Lösung der Aufgabe erfolgt durch einen Wabenkernaufbau, umfassend zumindest zwei Wabenkerne und eine zwischen den Wabenkernen angeordnete Verbindungsschicht, wobei die Verbindungsschicht gasdurchlässig ausgebildet ist und lediglich im Bereich der Stege der Wabenkerne Klebstoff zur Verklebung mit den Wabenkernen aufweist, wobei zumindest an einem der Wabenkerne die Enden der Stege die von der Verbindungsschicht abgewandt sind zumindest zonenweise gestaucht sind und die Enden der Stege die der Verbindungsschicht zugewandt sind in der selben Zone weniger, insbesondere gar nicht, gestaucht sind, wobei die zwei Wabenkerne voneinander verschieden ausgebildet sind, nämlich unterschiedliche Wabenausrichtung aufweisen, wobei die Stege von einem der zwei Wabenkerne zumindest zonenweise eine Schräglage aufweisen, also einen Winkel der Stegorientierung des Wabenkerns in Bezug auf die Oberfläche des Bauteils der nicht 90 Grad entspricht.

Erfindungsgemäß wird daher eine Verbindungsschicht als Zwischenschicht zwischen zwei Wabenkernen verwendet um diese miteinander zu verbinden, jedoch wird kein flächiger Kleberauftrag auf die Verbindungsschicht vorgenommen und diese generell gasdurchlässig ausgebildet. Hierdurch wird sicher gestellt dass die beiden Wabenkerne gasdurchlässig, insbesondere luftdurchlässig, miteinander verbunden sind, so dass ein in den Hohlräumen zwischen den Stegen der Wabenkerne eingeschlossenes Medium wie Luft durch die Verbindungsschicht diffundieren kann, wodurch auch ein Druckausgleich zwischen den Wabenkernen ermöglicht wird. Durch den gasdurchlässig ausgebildeten Kleberauftrag im Bereich der Enden der Stege kann ein erfindungsgemäßer Wabenkern besonders vorteilhaft nachträglich gestaucht werden, da durch die Verstärkungswirkung des Klebers die betreffenden inneren Steg-Enden verstärkt sind und hierdurch die an einer äußeren, einer gegebenenfalls später sichtbaren Oberfläche des Bauteils zugewandten Enden der Stege stärker gestaucht werden und hierdurch eine bessere Qualität der Sicht-Oberfläche vorbereiten können.

Natürlich können auch mehr als zwei Lagen von Wabenkernen erfindungsgemäß miteinander verbunden werden, wobei bevorzugt jeweils gasdurchlässige Verbindungsschichten zwischen den benachbarten Wabenkern-Lagen eingesetzt werden.

Erfindungsgemäß sind zumindest an einem der Wabenkerne die Enden der Stege die von der Verbindungsschicht abgewandt sind zumindest zonenweise gestaucht und bevorzugt sind die Enden der Stege die der Verbindungsschicht zugewandt sind in der selben Zone weniger, insbesondere gar nicht, gestaucht. "Zone" bedeutet dabei einen Abschnitt des Wabenkernes in dessen länglicher Erstreckung, also normal auf den Schichtaufbau des Wabenkernaufbaus. Hierdurch kann ein Sandwichbauteil mit einem derartigen Wabenkernaufbau eine Oberfläche mit hoher Qualität im Bereich der gestauchten Wabenkern-Enden aufweisen.

Erfindungsgemäß ist, dass die zwei Wabenkerne voneinander verschieden ausgebildet sind und daher mit unterschiedlichen Eigenschaften ausgestattet sind. Insbesondere sind Wabenkerne mit unterschiedlicher Wabenausrichtung gestapelt und miteinander verbunden. Dies ist vor allem deshalb vorteilhaft, weil dadurch das spätere fertige Bauteil partiell mit unterschiedlichen Funktions- bzw. Bauteileigenschaften ausgestattet werden kann. Einerseits soll das Bauteil eine bestimmte erforderliche Festigkeit und Steifigkeit aufweisen andererseits soll es aber an bestimmten Stellen weiche, leichter verformbare Zonen beinhalten, wie es beispielsweise zur Vermeidung von Verletzungen bei Kollisionen mit Fußgängern vorteilhaft ist.

Erfindungsgemäß können außen am Bauteil angeordnete Kerne, also oben und unten angeordnete Kerne, in eine Schräglage gebracht werden, so dass eine bestimmte Stegorientierung der Kerne in Bezug auf die Oberflächen (Außenflächen) erreicht wird. Hierdurch kann die Qualität der Bauteil-Oberfläche weiter erhöht werden.

Insbesondere kann eine derartige Schräglage von Wabenkernen eingeschränkt in bestimmten Zonen eines späteren Sandwichbauteiles hergestellt werden, beispielsweise in Zonen mit stark gebogener Bauteilgeometrie.

Dazu kann die Zwischenschicht, insbesondere Faserzwischenschicht, vorgespannt werden und wird vorteilhaft nicht nur zwischen den Kernlagen Fasermaterial eingebracht bzw. aufgebracht, sondern auch an den Deckflächen des Bauteils.

Vorzugsweise werden die Wabenkerne lediglich an deren Steg-Enden mit der Verbindungsschicht verklebt.

Als Wabenkernformen kommen alle erdenklichen Hohlräume und Stege aufweisende geometrische Formen in Frage, beispielsweise bienenwabenförmige oder wellenförmige oder runde, dreieckige, rechteckige, quadratische, trapezförmige, vieleckige und so weiter, wobei es sich hierbei (innerhalb eines Wabenkernes) nicht um regelmäßig wiederkehrende Formen handeln muss.

Die Verbindungsschicht ist bevorzugt eine Fasern umfassende Lage, insbesondere ein Fasermaterial, beispielsweise ein Faserhalbzeugmaterial, aus Gewebe, Gelege, Gestrick, Gitter, Matten und / oder Vlies wobei die Fasern beispielsweise Naturfasern - zum Beispiel Flachsfasern, Hanf oder Bambus - oder Glasfasern, Kohlenstofffasern, Keramikfasern, Textilfasern oder Kunststofffasern sein können. Auch Verstärkungen mit Papier oder Nano-Partikel sind möglich. Möglich wäre auch, dass die Verbindungsschicht gänzlich aus Papier oder Karton oder aus einem anderen zellulosebasierten Material besteht. Hierzu ist es jedoch erforderlich, dass die Bereiche zwischen den Stegen gasdurchlässig gelassen sind. Die Verbindungsschicht kann hierbei aus einer oder mehreren Fasermaterial- bzw. Faserhalbzeugmaterial-Schichten bestehen.
Vorzugsweise ist die Verbindungsschicht mit Kurz- oder Langfasern verstärkt. Insbesondere kann das Material Nano-Partikel umfassen.

Die Wabenkerne sind vorzugsweise Papierkerne, Kartonkerne oder aus anderen auf Zellulose basierten Materialien, können aber auch Kerne aus Kunststoff, wie PU, PP und ähnliches oder aus Metall, Holz oder Schaummaterial sein.

Die Wabenkerne können Stege in bienenwabenförmiger Anordnung aufweisen oder in wellenförmiger Anordnung. Die Stege können jedoch auch runde, dreieckige, rechteckige, quadratische, trapezförmige oder vieleckige Zellen ausbilden.

Ein erfindungsgemäßes Verfahren zur Herstellung eines Wabenkernaufbaus umfasst bevorzugt die Schritte
- Bereitstellen der zwei Wabenkerne und der Verbindungsschicht,
- Aufbringen von Klebstoff auf die Steg-Enden der beiden Wabenkerne,
- Zusammenfügen der Wabenkerne mit der dazwischen angeordneten Verbindungsschicht, das heißt an die Verbindungsschicht wird an jeder der beiden Seiten ein Wabenkern gefügt.

Das "Zusammenfügen" kann insbesondere durch Auflegen erfolgen, wobei bevorzugt auch ein Drücken oder Pressen des Stapels erfolgt.

Hierbei können als Verbindungsschicht insbesondere trockene Fasermatten verwendet werden.

Anstatt den Klebstoff auf die Steg-Enden der beiden Wabenkerne aufzubringen kann der Klebstoff auch auf die Verbindungsschicht im Bereich der Steg-Enden der beiden Wabenkerne aufgebracht werden. Dies kann insbesondere durch die Verwendung von vorimprägniertem Fasermaterial erfolgen, wobei jedoch die Bereiche zwischen den Stegen gasdurchlässig gelassen sind.

Der Klebstoff wird bevorzugt durch Rollen, Sprühen, Streichen oder Eintauchen auf die Stege und/oder die Verbindungsschicht aufgebracht, bevorzugt auf die Stege von beiden Wabenkernen.

Nach dem Zusammenfügen der Wabenkerne mit der Verbindungsschicht kann bevorzugt zugewartet werden, um das Bauteil leicht an gelieren zu lassen, so lange bis der Klebstoff eine vordefinierte Festigkeit erreicht hat, besonders bevorzugt jedoch nicht so lange, dass der Kleber schon komplett ausgehärtet ist.

Danach wird bevorzugt das Bauteil, nämlich der Stapel gebildet aus den Wabenkernen mit dazwischen angeordneter Verbindungsschicht, mit trockenem Fasermaterial , ein- oder beidseitig, also oben und/oder unten am Stapel, belegt, beispielsweise ummantelt, wobei das Fasermaterial einen Überstand über die Wabenkerne aufweisen kann oder auch keinen Überstand aufweist. Anschließend wird das Fasermaterial mit einer Matrix, vorzugsweise mit einer PUR-Matrix getränkt, besprüht und/oder benetzt. Hierdurch können insbesondere Deckschichten erstellt werden und somit ein Sandwichbauteil hergestellt werden.

Als Matrix bzw. Matrixmaterial kommen bevorzugt thermoplastische oder duroplastische Kunststoffe zur Anwendung.

Als Klebstoff zur Verklebung der Verbindungsschicht mit den Wabenkernen kann das Matrixmaterial verwendet werden, oder auch ein anderer Klebstoff.

Unter Fasermaterial ist hier sowohl Faserverbundmaterial als auch Faserhalbzeugmaterial zu verstehen.

Unter Fasermaterial sind beispielsweise Gewebe, Gelege, Gestricke, Gitter, Matten und / oder Vlies zu verstehen, wobei die Fasern beispielsweise aus Naturfasern, Flachsfasern, Glasfasern, Kohlenstofffasern, Kunststofffasern, Keramikfasern oder Textilfasern bestehen.

Das Fasermaterial kann eine Matrix bereits enthalten oder noch nicht enthalten, insbesondere kann die Matrix auch ein aus zwei oder mehr Komponenten bestehendes Material wie Harz mit Härter sein. Hierbei ist auch die Verwendung von Kunststoff bzw. Kunststoffharz möglich, welchem bereits kleine Faserschnösel beigemischt sind und dieses so auf den Stapel aus Wabenkernen und Verbindungsschicht als Deckschicht aufgetragen wird.

Statt mit einem trockenen Fasermaterial kann der Papierwabenkern auch bereits mit einem mit einer Matrix vorimpregnierten Fasermaterial (prepreg), beispielsweise einem thermoplastischen Kunststoff, auf der Ober- und Unterseite belegt bzw. ummantelt werden.

Auch das Aufbringen eines noch flüssigen Faservermatrixmaterials wäre zur Erzeugung einer Deckschicht möglich.

Anschließend kann das Bauteil in einem, bevorzugt beheizten, Formpresswerkzeug formgepresst werden.

Beim Pressen kann das Sandwichbauteil in die endgültige Bauteilform bzw. dreidimensionale Kontur gebracht werden. Es kann dabei eine Formveränderung bzw. Erzeugung eines Konturbauteiles erreicht werden und auch eine Änderung der Eigenschaften der Kerne, insbesondere durch teilweises Kollabieren der Stege.

Gerade durch ein teilweises Kollabieren der Steg, insbesondere nur in gewünschten, vordefinierten Bereichen der Stege, vorzugsweise an Steg-Enden im Außenbereich des späteren Bauteils, wird die Ausbildung einer schönen Oberfläche im Sichtbereich des Bauteils ermöglicht.

Bis zur Erreichung einer ausreichenden Festigkeit der Matrix kann das Bauteil in dem Formpresswerkzeug verbleiben.

Ein solches Sandwichbauteil kann als flächiges Bauteil eines Kraftfahrzeuges verwendet werden, insbesondere als Frontklappe, Tür, Dach, Heckklappe, Ladeboden, Abdeckung, Karosserieboden oder Torsionskasten.

### Kurzbeschreibung der Zeichnungen

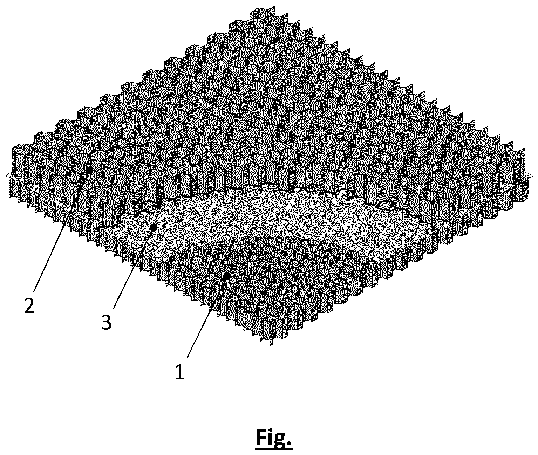

Die Erfindung wird im Folgenden beispielhaft unter Bezugnahme auf die Zeichnung beschrieben.
- Fig.: ist eine dreidimensionale Darstellung eines nicht erfindungsgemäßen Wabenkernaufbaus.

### Beschreibung der Erfindung

In der Fig. ist ein nicht erfindungsgemäßer Wabenkernaufbau dargestellt. Der Wabenkernaufbau umfasst zwei Wabenkerne 1 und 2 und eine zwischen den Wabenkernen 1, 2 angeordnete Verbindungsschicht 3.

Die Wabenkerne 1, 2 sind Papierwabenkerne in Bienenwabenstruktur, also mit Sechskantzellen, wobei die zwei Wabenkerne 1, 2 voneinander verschieden ausgebildet sind, indem Wabenkern 1 eine andere Wabengröße aufweist als Wabenkern 2.

Die Verbindungsschicht 3 wird als Zwischenschicht zum beidseitigen Kleben verwendet, so dass die Verbindungsschicht 3 an einer Seite mit dem Wabenkern 1 und an der zweiten Seite mit dem Wabenkern 2 verklebt ist.

Klebstoff ist auf der Verbindungsschicht 3 lediglich im Bereich der Stege der Wabenkerne 1, 2 vorhanden. Dort sind die Enden der Stege der Wabenkerne 1, 2 mit der Verbindungsschicht 3 verklebt.

Die Verbindungsschicht 3 ist beispielsweise ein Vlies, eine Naturfaser (zum Beispiel Flachsfaser, Hanf, Bambus etc.) Glasfaser oder Kohlefaser und jedenfalls gasdurchlässig ausgebildet. Dadurch dass auch Klebstoff der den Gasdurchtritt verhindern könnte nicht flächig auf der Verbindungsschicht 3 aufgetragen ist, bleibt ein Luftaustausch und somit ein Druckausgleich zwischen den Wabenkernen 1, 2 möglich.

### Bezugszeichenliste

- 1: Wabenkern
- 2: Wabenkern
- 3: Verbindungsschicht

## Patentansprüche

1. Wabenkernaufbau, umfassend zumindest zwei Wabenkerne (1, 2) und eine zwischen den Wabenkernen (1, 2) angeordnete Verbindungsschicht (3),
wobei die Verbindungsschicht (3) gasdurchlässig ausgebildet ist und lediglich im Bereich der Stege der Wabenkerne (1, 2) Klebstoff zur Verklebung mit den Wabenkernen (1, 2) aufweist, **dadurch gekennzeichnet, dass** zumindest an einem der Wabenkerne (1, 2) die Enden der Stege die von der Verbindungsschicht (3) abgewandt sind zumindest zonenweise gestaucht sind und die Enden der Stege die der Verbindungsschicht (3) zugewandt sind in der selben Zone weniger, insbesondere gar nicht, gestaucht sind, wobei die zwei Wabenkerne (1, 2) voneinander verschieden ausgebildet sind, nämlich unterschiedliche Wabenausrichtung aufweisen, wobei die Stege von einem der zwei Wabenkerne (1, 2) zumindest zonenweise eine Schräglage aufweisen, also einen Winkel der Stegorientierung des Wabenkerns (1, 2) in Bezug auf die Oberfläche des Bauteils der nicht 90 Grad entspricht.

2. Wabenkernaufbau, nach Anspruch 1,
**dadurch gekennzeichnet, dass** die Wabenkerne (1, 2) lediglich an deren Steg-Enden mit der Verbindungsschicht (3) verklebt sind.

3. Wabenkernaufbau nach zumindest einem der vorhergehenden Ansprüche,
**dadurch gekennzeichnet, dass** die Verbindungsschicht (3) eine Fasern umfassende Lage ist, insbesondere ein Fasermaterial aus Gewebe, Gelege, Gestrick-, Matten und / oder Vlies wobei die Fasern beispielsweise Naturfasern wie zum Beispiel Flachsfasern, Hanf oder Bambus oder Glasfasern, Kohlenstofffasern, Kunststofffasern, Keramikfasern oder Textilfasern sein können.

4. Wabenkernaufbau nach zumindest einem der vorhergehenden Ansprüche,
**dadurch gekennzeichnet, dass** die Verbindungsschicht (3) Kurz- und/ oder Langfasern und/ oder Papier umfasst und / oder mit Nano-Partikeln verstärkt ist.

5. Wabenkernaufbau nach zumindest einem der vorhergehenden Ansprüche,
**dadurch gekennzeichnet, dass** die Wabenkerne (1, 2) Papierkerne sind oder Kerne aus Kunststoff, Metall, Holz oder Schaum.

6. Wabenkernaufbau nach zumindest einem der vorhergehenden Ansprüche,
**dadurch gekennzeichnet, dass** die Wabenkerne (1, 2) Stege in bienenwabenförmiger Anordnung aufweisen oder in wellenförmiger Anordnung aufweisen oder rund, dreieckig, rechteckig, quadratisch, trapezförmig oder vieleckig angeordnet sind.

7. Verfahren zur Herstellung eines Sandwichbauteils umfassend einen Wabenkernaufbau nach zumindest einem der vorhergehenden Ansprüche, umfassend die Schritte
- Bereitstellen der zwei Wabenkerne (1, 2) und der Verbindungsschicht (3),
- Aufbringen von Klebstoff auf die Steg-Enden der beiden Wabenkerne (1, 2),
- Zusammenfügen der Wabenkerne (1, 2) mit der dazwischen angeordneten Verbindungsschicht (3), wobei nach dem Zusammenfügen der Wabenkerne (1, 2) mit der Verbindungsschicht (3) der Stapel aus Wabenkernen (1, 2) und Verbindungsschicht (3) ein- oder beidseitig mit trockenem Fasermaterial belegt, insbesondere ummantelt, wird und anschließend mit einer Matrix, vorzugsweise mit einer PUR-Matrix getränkt, besprüht und/oder benetzt wird, wobei der Stapel anschließend in einem, bevorzugt beheizten, Formpresswerkzeug formgepresst wird, so, dass die Stege des Wabenkerns zumindest teilweise gestaucht werden.

8. Verfahren nach Anspruch 7,
**dadurch gekennzeichnet, dass** der Klebstoff durch Rollen, Sprühen, Streichen oder Eintauchen aufgebracht wird.

9. Sandwichbauteil, hergestellt nach einem Verfahren nach einem der Ansprüche 7 bis 8.

## Claims

1. Honeycomb core construction comprising at least two honeycomb cores (1, 2) and a connection layer (3) that is disposed between the honeycomb cores (1, 2),
wherein the connection layer (3) is configured so as to be gas-permeable and has an adhesive for adhesively bonding to the honeycomb cores (1, 2) only in the region of the webs of the honeycomb cores (1, 2), **characterized in that** at least on one of the honeycomb cores (1, 2) the ends of the webs that face away from the connection layer (3) at least in zones are compressed, and the ends of the webs that face the connection layer (3) in the same zone are compressed to a lesser extent or, in particular, not compressed at all, wherein the two honeycomb cores (1, 2) are configured so as to be mutually dissimilar, in particular so as to have a dissimilar honeycomb alignment, the webs of one of the two honeycomb cores (1, 2) at least in zones has an oblique position, that is to say has an angle of the web orientation of the honeycomb core (1, 2) in relation to the surface of the component that does not correspond to 90 degrees.

2. Honeycomb core construction according to Claim 1, **characterized in that** the honeycomb cores (1, 2) are adhesively bonded to the connection layer (3) only at the web ends of the former.

3. Honeycomb core construction according to at least one of the preceding claims,
**characterized in that** the connection layer (3) is a fiber-comprising layer, in particular a fibrous material from a woven fabric, a scrim, a knitted fabric, mats, and/or a non-woven, wherein the fibers may be natural fibers, for example flax fibers, hemp or bamboo or glass fibers, carbon fibers, plastics fibers, ceramics fibers, or textile fibers, for example.

4. Honeycomb core construction according to at least one of the preceding claims,
**characterized in that** the connection layer (3) comprises long and/or short fibers, and/or paper, and/or is reinforced with nanoparticles.

5. Honeycomb core construction according to at least one of the preceding claims,
**characterized in that** the honeycomb cores (1, 2) are paper cores, or cores from plastics, metal, wood, or foam.

6. Honeycomb core construction according to at least one of the preceding claims,
**characterized in that** the honeycomb cores (1, 2) have webs in a honeycomb-shaped arrangement or in an undulated arrangement, or are disposed in a circular, triangular, rectangular, square, trapezoidal, or polygonal manner.

7. Method for producing a sandwich component having a honeycomb core construction according to at least one of the preceding claims, the method comprising the following steps:
- providing the two honeycomb cores (1, 2) and the connection layer (3);
- applying an adhesive to the web ends of the two honeycomb cores (1, 2);
- joining the honeycomb cores (1, 2) having the connection layer (3) disposed therebetween, wherein after the honeycomb cores (1, 2) have been joined to the connection layer (3), the stack of honeycomb cores (1, 2) and connection layer (3) on one side or both sides is covered, in particular sheathed, with dry fibrous material, and is subsequently soaked, sprayed, and/or wetted with a matrix, preferably a PUR matrix, wherein the stack is subsequently press-molded in a preferably heated press-molding tool, in particular such that the webs of the honeycomb core are at least partially compressed.

8. Method according to Claim 7, **characterized in that** the adhesive is applied by rolling, spraying, brushing, or immersing.

9. Sandwich component produced by a method according to one of Claims 7 to 8.

## Revendications

1. Structure à noyau alvéolaire, comprenant au moins deux noyaux alvéolaires (1, 2) et une couche de liaison (3) disposée entre les noyaux alvéolaires (1, 2),
la couche de liaison (3) étant réalisée de manière perméable aux gaz et ne présentant un adhésif pour le collage avec les noyaux alvéolaires (1, 2) qu'au niveau des âmes des noyaux alvéolaires (1, 2), **caractérisée en ce qu'**au moins au niveau d'un des noyaux alvéolaires (1, 2), les extrémités des âmes qui sont éloignées de la couche de liaison (3) sont écrasées au moins par zones et les extrémités des âmes qui sont tournées vers la couche de liaison (3) sont moins écrasées, en particulier pas écrasées du tout, dans la même zone, les deux noyaux alvéolaires (1, 2) étant réalisés différemment l'un de l'autre, à savoir présentant une orientation alvéolaire différente, les âmes d'un des deux noyaux alvéolaires (1, 2) présentant au moins par zones une position inclinée, c'est-à-dire un angle de l'orientation des âmes du noyau alvéolaire (1, 2) par rapport à la surface de l'élément qui ne correspond pas à 90°.

2. Structure à noyau alvéolaire selon la revendication 1, **caractérisée en ce que** les noyaux alvéolaires (1, 2) ne sont collés à la couche de liaison (3) qu'au niveau de leurs extrémités d'âme.

3. Structure alvéolaire selon au moins l'une quelconque des revendications précédentes, **caractérisée en ce que** la couche de liaison (3) est une couche comprenant des fibres, en particulier un matériau fibreux en tissu, mat, tricot, natte et/ou non-tissé, les fibres pouvant par exemple être des fibres naturelles telles que par exemple des fibres de lin, du chanvre ou du bambou ou des fibres de verre, des fibres de carbone, des fibres en matière synthétique, des fibres céramiques ou des fibres textiles.

4. Structure alvéolaire selon au moins l'une quelconque des revendications précédentes, **caractérisée en ce que** la couche de liaison (3) comprend des fibres courtes et/ou longues et/ou du papier et/ou est renforcée par des nanoparticules.

5. Structure alvéolaire selon au moins l'une quelconque des revendications précédentes, **caractérisée en ce que** les noyaux alvéolaires (1, 2) sont des noyaux en papier ou des noyaux en matière synthétique, en mélange, en bois ou en mousse.

6. Structure alvéolaire selon au moins l'une quelconque des revendications précédentes, **caractérisée en ce que** les noyaux alvéolaires (1, 2) présentent des âmes dans un agencement en forme de nid d'abeille ou dans un agencement en forme d'onde ou sont disposés en rond, en triangle, en carré, en rectangle, en trapèze ou en polygone.

7. Procédé pour la fabrication d'un élément en sandwich comprenant une structure alvéolaire selon au moins l'une quelconque des revendications précédentes, comprenant les étapes de
- mise à disposition des deux noyaux alvéolaires (1, 2) et de la couche de liaison (3),
- application d'adhésif sur les extrémités des âmes de deux noyaux alvéolaires (1, 2),
- assemblage des noyaux alvéolaires (1, 2) avec la couche de liaison (3) située entre ceux-ci, la pile constituée par les noyaux alvéolaires (1, 2) et la couche intermédiaire (3) étant revêtue, en particulier enrobée, après l'assemblage des noyaux alvéolaires (1, 2) et de la couche intermédiaire (3), d'un ou des deux côtés par un matériau fibreux sec et ensuite imprégnée, pulvérisée et/ou mouillée par une matrice, de préférence une matrice de PUR, la pile étant ensuite moulée par compression dans un outil de moulage par compression, de préférence chauffé, de telle sorte que les âmes du noyau alvéolaire sont au moins partiellement écrasées.

8. Procédé selon la revendication 7, **caractérisé en ce que** l'adhésif est appliqué par application au rouleau, par pulvérisation, par enduction ou par trempage.

9. Élément en sandwich, fabriqué selon un procédé selon l'une quelconque des revendications 7 à 8.
